# EUROPEAN PATENT APPLICATION

(11) **EP 4 477 624 A1**
(43) Date of publication of application: **18.12.2024**
(21) Application number: 24179086.4
(22) Date of filing: 30.05.2024
(51) Int. Cl.: C01G 53/00, H01M 4/131, H01M 4/36, H01M 4/525, H01M 10/052

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 12.06.2023 KR 20230075035
(71) Applicant: Samsung SDI Co., Ltd., Yongin-si, Gyeonggi-do 17084 (KR)
(72) Inventor: DOO, Sungwook, 17084 Yongin-si (KR); KONG, Youngsun, 17084 Yongin-si (KR); KIM, Young-Ki, 17084 Yongin-si (KR); CHOO, Sung Ho, 17084 Yongin-si (KR); KANG, Seok Mun, 17084 Yongin-si (KR); YOON, Jaesang, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A positive electrode active material, a method of preparing the same, a positive electrode and a rechargeable lithium battery including the same are provided. The positive electrode active material includes a core particle including lithium nickel-manganese-aluminium-based composite oxide and a coating layer disposed on a surface of the core particles and containing aluminium and yttrium, wherein a nickel content (e.g., amount) in the core particle is greater than or equal to about 60 mol% based on 100 mol% of a total metal excluding lithium in the positive electrode active material, and an aluminium content (e.g., amount) of the coating layer is about 0.1 mol% to about 2 mol%, and a yttrium content (e.g., amount) of the coating layer is about 0.05 mol% to about 1 mol%, each based on 100 mol% of the total metal excluding lithium in the positive electrode active material.

## Description

### BACKGROUND

### (a) Field

This disclosure relates to positive electrode active materials, preparation methods thereof, positive electrodes including the positive electrode active materials and rechargeable lithium batteries including the positive electrodes.

### (b) Description of the Related Art

A portable information device (such as a cell phone, a laptop, smart phone, and/or the like) and/or an electric vehicle has utilized a rechargeable lithium battery having relatively high energy density and easy portability as a driving power source. Recently, research has been actively conducted to utilize a rechargeable lithium battery with relatively high energy density as a driving power source for hybrid and/or electric vehicles, or as a power storage power source for home power storage units and/or power walls.

Various positive electrode active materials have been investigated to realize rechargeable lithium batteries suitable for these applications. Among them, lithium nickel-based oxide, lithium nickel manganese cobalt composite oxide, lithium nickel cobalt aluminium composite oxide, and lithium cobalt oxide are mainly utilized as positive electrode active materials. However, while the demand for relatively large-sized, relatively high-capacity, or relatively high-energy-density rechargeable lithium batteries has recently increased, a shortage (severe shortage) in the supply of a positive electrode active material containing cobalt, a rare metal, is expected. For example, because the cobalt is expensive and lacks remaining reserves (e.g., has declining availability), there is a need for developing a positive electrode active material excluding (e.g., not including or free of) the cobalt or utilizing cobalt in a reduced amount.

### SUMMARY OF THE INVENTION

Aspects according to some embodiments are directed toward a positive electrode active material, which includes lithium nickel-manganese-aluminium-based composite oxide, securing economic feasibility, high capacity, and long cycle-life characteristics and exhibiting improved high-voltage characteristics and high-temperature characteristics, a method of preparing the positive electrode active material, a positive electrode including the positive electrode active material and a rechargeable lithium battery including the positive electrode.

Additional aspects will be set forth in part in the description which follows and, in part, will be apparent from the description, or may be learned by practice of the presented embodiments of the disclosure.

In one or more embodiments, a positive electrode active material includes core particles (e.g., a core particle) including lithium nickel-manganese-aluminium-based composite oxide and a coating layer on (e.g., disposed on) a surface of the core particles (e.g., the core particle) and containing yttrium, wherein a nickel content (e.g., amount) (e.g., in the core particle) is greater than or equal to about 60 mol% based on 100 mol% of a total metal excluding lithium in the positive electrode active material, and an aluminium content (e.g., amount) of the coating layer is about 0.1 mol% to about 2 mol%, and a yttrium content (e.g., amount) of the coating layer is about 0.05 mol% to about 1 mol%, each based on 100 mol% of the total metal excluding lithium in the positive electrode active material.

In one or more embodiments, a method of preparing a positive electrode active material includes mixing a nickel-manganese-aluminium-based composite hydroxide and a lithium raw material and performing a first heat treatment to obtain a lithium nickel-manganese-aluminium-based composite oxide, and adding the lithium nickel-manganese-based composite oxide to a solution of an aluminium raw material and a yttrium raw material mixed in an aqueous solvent, followed by mixing, drying, and performing a second heat treatment to obtain a positive electrode active material, wherein in the nickel-manganese-aluminium-based composite hydroxide, a nickel content (e.g., amount) is greater than or equal to about 60 mol% based on 100 mol% of a total metal in the nickel-manganese-aluminium-based composite hydroxide, an aluminium content (e.g., amount) from the aluminium raw material is about 0.1 mol% to about 2 mol% based on 100 mol% of a total metal excluding lithium in the positive electrode active material, and a yttrium content (e.g., amount) from the yttrium raw material is about 0.05 mol% to about 1 mol% based on 100 mol% of the total metal excluding lithium in the positive electrode active material.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the positive electrode, a negative electrode, and an electrolyte.

At least some of the above and other features of the invention are set out in the claims.

The positive electrode active material according to one or more embodiments may maximize or increase capacity, while minimizing or reducing a production cost, may ensure long cycle-life characteristics and/or may improve high-voltage characteristics and high-temperature characteristics. When the positive electrode active material is applied to a rechargeable lithium battery, high initial charge/discharge capacity and efficiency may be achieved under high-voltage conditions, long cycle-life characteristics may be realized (or maintained), and an amount of gas generated due to the high-voltage and high-temperature operation may be effectively suppressed or reduced.

### BRIEF DESCRIPTION OF THE DRAWINGS

The accompanying drawings are included to provide a further understanding of the present disclosure and is incorporated in and constitute a part of this specification. The drawings illustrate embodiments of the present disclosure and, together with the description, serve to explain principles of the present disclosure. In the drawings:
FIG. 1 is a cross-sectional view schematically showing a rechargeable lithium battery according to one or more embodiments.
FIGs. 2 and 3 are scanning electron microscope (SEM) images of the positive electrode active material of Comparative Example 1.
FIGs. 4 and 5 are SEM images of the positive electrode active material of Comparative Example 2.
FIGs. 6 and 7 are SEM images of the positive electrode active material of Example 2.
FIGs. 8 and 9 are SEM-EDS analysis results of the positive electrode active material of Example 2.

### DETAILED DESCRIPTION OF THE EMBODIMENTS

Hereinafter, specific embodiments will be described in more detail so that those of ordinary skill in the art can easily implement them. However, this disclosure may be embodied in many different forms and should not be construed as limited to the example embodiments set forth herein.

The terminology used herein is used to describe embodiments only, and is not intended to limit disclosure. The singular expression includes the plural expression unless the context clearly dictates otherwise.

As used herein, the term "combination thereof" refers to a mixture, a laminate, a composite, a copolymer, an alloy, a blend, a reaction product, and/or the like of the constituents.

Herein, it should be understood that terms such as " comprises," "includes," or "have" are intended to designate the presence of an embodied aspect, number, operation, element, and/or a (e.g., any suitable) combination thereof, but it does not preclude the possibility of the presence or addition of one or more other features, number, operation, element, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In addition, the term "layer" as used herein includes not only a shape formed on the whole surface if (e.g., when) viewed from a plan view, but also a shape formed on a partial surface.

In addition, the average particle diameter may be measured by a suitable method (e.g., known to those skilled in the art), for example, by a particle size analyzer, or by a transmission electron microscope image or a scanning electron microscope image. In one or more embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to the diameter (D₅₀) of particles having a cumulative volume of 50 volume% in the particle size distribution that is obtained by measuring the size (diameter or length of the major axis) of about 20 particles at random in a scanning electron microscope image.

Herein, the term "or" is not to be construed as an exclusive meaning, for example, "A or B" refers to A, B, A+B, and/or the like.

The term "Metal" as used herein refers to ordinary metals, transition metals and metalloids (semi-metals).

### Positive Electrode Active Material

In one or more embodiments, a positive electrode active material includes core particles (e.g., a core particle) including lithium nickel-manganese-aluminium-based composite oxide (e.g., a plurality of core particles formed of lithium nickel-manganese-aluminium-based composite oxide) and a coating layer arranged on a surface of (e.g., each of) the core particles and containing yttrium, wherein a nickel content (e.g., amount) (e.g., in the core particle) is greater than or equal to about 60 mol% based on 100 mol% of a total metal excluding lithium in the positive electrode active material, and an aluminium content (e.g., amount) of the coating layer is about 0.1 mol% to about 2 mol%, and a yttrium content (e.g., amount) of the coating layer is about 0.05 mol% to about 1 mol%, each based on 100 mol% of the total metal excluding lithium in the positive electrode active material.

As the price of cobalt, a rare metal, has recently risen sharply, there is a demand for the development of positive electrode active materials that exclude (do not include) cobalt or with a reduced cobalt content (e.g., amount). Among them, a positive electrode active material having an olivine crystal structure (such as lithium iron phosphate (LFP), lithium manganese phosphate (LMP), lithium manganese iron phosphate (LMFP), and/or the like) or a spinel crystal structure (such as lithium manganese oxide (LMO) and/or the like) has a limitation in realizing relatively high capacity due to small available lithium amount within their structures. The layered nickel-manganese positive electrode active material has excellent or suitable capacity and efficiency characteristics due to the relatively high available lithium amount in the structure, making it suitable as a material for relatively high-capacity batteries. However, as cobalt, which plays a key role in the layered structure, is removed, structural stability decreases, resistance increases, and it becomes difficult to secure long cycle-life characteristics. In addition, excluding cobalt leads to a problem that the side reaction between the positive electrode active material and the electrolyte is accelerated under relatively high-voltage and relatively high-temperature conditions, thereby increasing an amount of gas generated and deteriorating the cycle-life characteristics.

In one or more embodiments, aluminium is introduced into a base material and lithium nickel-manganese-aluminium-based composite oxide is applied as a core particle to improve structural stability and minimize or reduce production costs. In addition, aluminium and yttrium are concurrently (e.g., simultaneously) coated at suitable (e.g., specific) contents to form a substantially uniform coating layer, providing a positive electrode active material that can maximize or increase capacity and efficiency and can achieve long cycle-life characteristics by reducing gas generation even under relatively high-voltage or relatively high-temperature conditions.

### Core Particles

The core particles include lithium nickel-manganese-aluminium-based composite oxide.

The nickel content (e.g., amount) satisfies greater than or equal to about 60 mol% based on 100 mol% of a total metal excluding lithium in the positive electrode active material.

The nickel is contained in the core particles, but may move to some of the coating layers during the coating process. Therefore, the nickel content (e.g., amount) may refer to the nickel content (e.g., amount) contained in the entire positive electrode active material (e.g., both in the core and the coating layers). The nickel content (e.g., amount) may be, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the positive electrode active material. If the nickel content (e.g., amount) satisfies the above ranges, relatively high capacity can be achieved and structural stability can be increased even if the cobalt content (e.g., amount) is reduced.

In some embodiments, a manganese content (e.g., amount) may be, for example, about 10 mol% to about 40 mol%, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30% based on 100 mol% of a total metal excluding lithium in the positive electrode active material. Manganese is contained in the core particles, but may move to some of the coating layers during the coating process, and therefore the manganese content (e.g., amount) may refer to a manganese content (e.g., amount) contained in the entire positive electrode active material (e.g., both in the core and the coating layers). If the manganese content (e.g., amount) satisfies the above ranges, the positive electrode active material may improve structural stability while realizing relatively high capacity.

The aluminium content (e.g., amount) of the core particles based on 100 mol% of a total metal excluding lithium in the positive electrode active material may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. Herein, the aluminium content (e.g., amount) refers to the content (e.g., amount) of aluminium present in the core particles. If the aluminium content (e.g., amount) of the core particles satisfies the above ranges, a stable layered structure may be maintained even if cobalt is excluded from the core particles, the problem of structure collapse due to charging and discharging may be suppressed or reduced, and long cycle-life characteristics of the positive electrode active material may be realized.

According to one or more embodiments, the concentration of aluminium within the core particle may be substantially uniform. In some embodiments, there may be a concentration gradient of aluminium from the center to the surface within the core particle, or the aluminium concentration in the internal portion of the core particle may be neither higher nor lower than in the external portion, and that the aluminium within the core particle may be evenly distributed. This may be a structure obtained by utilizing aluminium raw materials during precursor production without additional doping of aluminium during the synthesis of the core particles and thereby synthesizing a composite oxide utilizing nickel-manganese-aluminium-based hydroxide as a precursor. The core particle may be in the form of a secondary particle in which a plurality of primary particles are agglomerated, and the aluminium content (e.g., amount) inside the primary particle may be the same (or substantially the same) or similar regardless of the location of the primary particle. For example, if a primary particle is selected at a random position in the cross-section of a secondary particle and the aluminium content (e.g., amount) is measured inside the primary particle rather than at its interface (e.g., with another particle), regardless of the location of the primary particle, that is, whether the primary particle is close to the center of the secondary particle or close to the surface, the aluminium content (e.g., amount) may be (e.g., substantially) the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

In some embodiments, the lithium nickel-manganese-aluminium-based composite oxide may be represented by Chemical Formula 1.

[Chemical Formula 1] Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.39, 0.01≤z1≤ 0.03, 0≤w1≤0.29, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, and Zr, and X is one or more elements selected from among F, P, and S.

In some embodiments, in Chemical Formula 1, 0.9≤a1≤1.5, or 0.9≤a1≤1.2. In some embodiments, 0.6≤x1≤0.79, 0.6≤x1≤0.78, 0.6≤x1≤0.75, 0.65≤x1≤0.8, or 0.7 ≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01<z1≤0.02, or 0.01<z1≤0.019; and 0≤w1 ≤0.28, 0≤w1 ≤0.27, 0≤w1 ≤0.26, 0≤w1 ≤0.25, 0≤w1 ≤0.24, 0≤w1 ≤0.23, 0≤w1 ≤0.22, 0≤w1 ≤0.21, 0≤w1 ≤0.2, 0≤ w1≤0.15, 0≤w1 ≤0.1, or 0≤w1 ≤0.09.

In some embodiments, the lithium nickel-manganese-aluminium-based composite oxide of the core particles may be a cobalt-free compound that does not include cobalt or includes a very small amount of cobalt.

The core particles may be in a form of secondary particles made by agglomerating a plurality of primary particles. The secondary particles may be spherical, elliptical, polyhedral, or irregular in shape, and the primary particles may be spherical, elliptical, plate-shaped, and/or a (e.g., any suitable) combination thereof.

The core particles are susceptible to chemical attack from components in the electrolyte if (e.g., when) the battery is operated under relatively high-voltage and/or relatively high-temperature conditions, and side reactions with the electrolyte may occur. Accordingly, there may be a problem that the battery cycle-life and safety are reduced due to the large amount of gas generated. These problems can be solved by introducing a coating layer according to one or more embodiments that will be described in more detail later.

### Coating Layer

The aluminium content (e.g., amount) in the coating layer may be about 0.1 mol% to about 2 mol%, for example about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. This Al content (e.g., amount) refers only to the content (e.g., amount) of aluminium included in the coating layer, separately from (not counting for) the aluminium included within the core particle. The aluminium content (e.g., amount) in the coating layer can be measured, for example, through SEM-EDS analysis of the surface or cross-section of the positive electrode active material. if the aluminium content (e.g., amount) in the coating layer satisfies these ranges, the coating layer may have a substantially uniform and thin thickness, which may not increase resistance of the positive electrode active material while effectively suppress or reduce a side reaction with the electrolyte and thereby, improve cycle-life characteristics of a rechargeable lithium battery under relatively high-voltage and relatively high-temperature conditions. For example, if the aluminium content (e.g., amount) of the coating layer is excessive (e.g., greater than about 2 mol%), a substantially uniform coating layer may not be formed or resistance may increase, which may reduce charge/discharge efficiency and cycle-life characteristics, and if the aluminium content (e.g., amount) of the coating layer is too small (e.g., lower than about 0.1 mol%), a coating layer of an appropriate or suitable thickness is not formed and an effect of suppressing or reducing side reactions with the electrolyte may be reduced.

The yttrium content (e.g., amount) in the coating layer may be about 0.05 mol% to about 1 mol%, for example, about 0.1 mol% to about 1 mol%, about 0.1 mol% to about 0.9 mol%, about 0.1 mol% to about 0.8 mol%, or about 0.1 mol% to about 0.6 mol% based on 100 mol% of a total metal excluding lithium in the positive electrode active material (e.g. about 0.1 mol% to about 0.5 mol%, about 0.2 mol% to about 0.5 mol%, or about 0.3 mol% to about 0.5 mol%). If the yttrium content (e.g., amount) satisfies the above ranges, the positive electrode active material forms a good or suitable coating layer without reducing capacity or increasing resistance, effectively suppressing or reducing side reactions with the electrolyte and effectively reducing the amount of gas generated under relatively high-voltage or relatively high-temperature conditions.

In one or more embodiments, both aluminium and yttrium are (e.g., simultaneously) contained (e.g., included) in the coating layer, and compared to the case where only one of the two is contained (e.g., included), the amount of gas generated under relatively high-voltage or relatively high-temperature operating conditions can be significantly reduced and the cycle-life characteristics can be improved.

The coating layer according to one or more embodiments may be in the form of a film that continuously surrounds the surface of the core particle, for example, may be in the form of a shell that surrounds (e.g., encapsulates) the entire surface of the core particle. This is distinct from a structure in which only portion of the surface of the core particle is partially coated. According to one or more embodiments, the coating layer may be formed to cover the entire surface of the core particle and may be formed to be very or substantially thin and substantially uniform in thickness, and therefore the positive electrode active material does not substantially increase resistance or substantially decrease capacity, while still suitably improves structural stability, effectively suppresses side reactions with electrolytes, substantially reduces the amount of gas generated under relatively high-voltage and relatively high-temperature conditions, and achieves relatively long cycle-life characteristics.

A thickness of the coating layer may be about 30 nanometer (nm) to about 500 nm, for example about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer satisfies the thickness range, the structural stability of the positive electrode active material may be improved without increasing resistance or reducing capacity due to the coating, and the side reaction with the electrolyte may be effectively suppressed or reduced. The thickness of the coating layer may be measured through, for example, TOF-SIMS, XPS, or EDS analysis, and the thickness range of the coating layer may be measured through TEM-EDS line profile.

The coating layer according to one or more embodiments may be thin and substantially uniform in thickness, at the level of tens to hundreds of nanometers. For example, the deviation in coating layer thickness within one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic average value by the arithmetic average value and multiplying by 100. The fact that the deviation or standard deviation of the coating layer thickness satisfies the above ranges indicates that a coating layer of substantially uniform thickness is formed (e.g., well formed) in the form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

Due to the characteristics of each element in the coating layer, the aluminium may exist in the form of a substantially continuous film and in contrast yttrium may instead exist in the form of islands or separate patterns.

In one or more embodiments, aluminium and yttrium may be mixed in one coating layer. In this case, aluminium may exist in the form of a substantially continuous film and yttrium may instead exist in the form of islands, but the present disclosure is not limited thereto.

In one or more embodiments, aluminium and yttrium may each form separate layers. For example, the positive electrode active material according to one or more embodiments may include a first coating layer arranged on the surface of the core particle and including aluminium, and a second coating layer arranged on the first coating layer and including yttrium. A first coating layer in the form of a thin film may be formed as aluminium first attaches or is absorbed to the surface of the core particle, and then yttrium may be coated on it to form a second coating layer. In some embodiments, yttrium may be mixed in the first coating layer and the second coating layer, but the first coating layer may be an aluminium-rich coating layer mainly composed of aluminium and the second coating layer may be a yttrium-rich coating layer mainly composed of yttrium. In this case as well, yttrium may exist in a form of islands in the second coating layer, but the present disclosure is not limited thereto.

Thicknesses of the first coating layer and the second coating layer are not particularly limited. However, the thickness of the first coating layer may be about 10 nm to about 200 nm, for example, about 20 nm to about 200 nm, about 30 nm to about 200 nm, or about 30 nm to about 180 nm. The thickness of the second coating layer may be about 20 nm to about 300 nm, for example, about 20 nm to about 250 nm, about 20 nm to about 200 nm, about 30 nm to about 300 nm, or about 50 nm to about 300 nm. If each thickness satisfies the above respective ranges, the structural stability of the positive electrode active material can be improved without increasing resistance or decreasing capacity due to the coating, and the amount of gas generated during relatively high-voltage and relatively high-temperature operation can be effectively reduced by effectively suppressing or reducing side reactions with the electrolyte.

In one or more embodiments, the coating layer may further include nickel, manganese, or a (e.g., any suitable) combination thereof in addition to aluminium and yttrium. The nickel and manganese included in the core particles may have been introduced during the coating layer formation process, and their contents are not particularly limited. The coating layer according to one or more embodiments essentially includes aluminium and yttrium while optionally including nickel and manganese, and is formed to be thin and substantially uniform in thickness, thereby improving the relatively high-voltage characteristics of the positive electrode active material and improving the cycle-life characteristics.

### Grain Boundary Coating Portion

During the coating layer formation process, aluminium may diffuse into the core particles. Accordingly, the positive electrode active material according to one or more embodiments may further include a grain boundary coating portion including aluminium and arranged on the surface of the primary particles in the internal portion of the secondary particles. Herein, the secondary particle refers to the core particle, and the internal portion of the secondary particle may refer to the entire internal portion excluding the surface of the secondary particle, or the internal portion may be a region from the center of the secondary particle to the surface of the secondary particle, up to about 60 length % of the radius of the secondary particle. The grain boundary coating is distinct from the coating layer on the surface of the core particle, and refers to the coating portion formed on the surface of the primary particles inside the core particle. The presence of a grain boundary coating portion can be confirmed through SEM-EDS analysis of the cross-section of the positive electrode active material. By forming (or providing) the aluminium grain boundary coating portion, the positive electrode active material can become more structurally stable and its cycle-life characteristics can be improved.

The aluminium content (e.g., amount) in the grain boundary coating portion is not particularly limited, and for example, the aluminium content (e.g., amount) in the grain boundary coating portion may be less than the aluminium content (e.g., amount) in the coating layer.

In some embodiments, the grain boundary coating may further include nickel, manganese, yttrium, or a (e.g., any suitable) combination thereof in addition to aluminium.

The average particle diameter (D₅₀) of the secondary particles of the positive electrode active material according to one or more embodiments is not particularly limited, but may be, for example, about 10 micrometers (µm) to about 18 µm, about 11 µm to about 16 µm, or about 12 µm to about 15 µm. If the average particle diameter of the secondary particles of the positive electrode active material satisfies the above ranges, relatively high capacity and long cycle-life can be realized and it can be suitable (e.g., advantageous) to form a coating layer according to one or more embodiments.

The cobalt content (e.g., amount) in the positive electrode active material according to one or more embodiments may be, for example, less than or equal to about 0.01 mol%, less than or equal to about 0.005 mol%, or less than or equal to about 0.001 mol%, for example, about 0 mol% to about 0.01 mol% based on 100 mol% of a total metal excluding lithium in the positive electrode active material. The positive electrode active material according to one or more embodiments may be, for example, a cobalt-free positive electrode active material.

The positive electrode active material according to one or more embodiments may be, for example, a cobalt-free positive electrode active material. In general, sodium ions can be utilized in the preparing process of a positive electrode active material, but according to the preparing method described in more detail later, core particles with a stable structure and a coating layer of substantially uniform thickness can be formed without utilizing sodium ions.

### Method of Preparing Positive Electrode Active Material

In one or more embodiments, a method of preparing a positive electrode active material includes (e.g. consists of) mixing a nickel-manganese-aluminium-based composite hydroxide and a lithium raw material and performing a first heat treatment to obtain a lithium nickel-manganese-aluminium-based composite oxide, and adding the lithium nickel-manganese-based composite oxide to a solution in which an aluminium raw material and a yttrium raw material are mixed in an aqueous solvent, followed by mixing, drying, and performing a second heat treatment to obtain a positive electrode active material. In the nickel-manganese-aluminium-based composite hydroxide, a nickel content (e.g., amount) is greater than or equal to about 60 mol% based on 100 mol% of a total metal in the nickel-manganese-aluminium-based composite hydroxide, an aluminium content (e.g., amount) of the aluminium raw material is about 0.1 mol% to about 2 mol% based on 100 mol% of a total metal excluding lithium in the positive electrode active material, and a yttrium content (e.g., amount) of the yttrium raw material is about 0.05 mol% to about 1 mol% based on 100 mol% of a total metal excluding lithium in the positive electrode active material. The aforementioned positive electrode active material may be prepared through the aforementioned method.

The layered nickel-manganese-aluminium-based composite hydroxide as a precursor of core particles, may be in the form of secondary particles in which a plurality of primary particles are agglomerated, and may not contain cobalt or may contain a very small amount. For example, it may be a cobalt-free nickel-manganese-aluminium-based composite hydroxide. The nickel-manganese-aluminium-based composite hydroxide can be prepared by a suitable (e.g., general) co-precipitation method.

A method for preparing a positive electrode active material according to one or more embodiments does not include additional doping with aluminium if (e.g., when) preparing core particles, but utilizes aluminium raw materials if (e.g., when) preparing the precursor, thereby utilizing a nickel-manganese-aluminium-based composite hydroxide as a precursor in which aluminium is evenly dispersed in the structure. Such a precursor may be utilized to prepare a positive electrode active material capable of stably maintaining the layered structure without cobalt despite repeated charges and discharges, in which aluminium byproducts or aluminium aggregates are not formed, resultantly, improving capacity and efficiency characteristics and cycle-life characteristics of the positive electrode active material.

The nickel content (e.g., amount) in the nickel-manganese-aluminium-based composite hydroxide may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal in the nickel-manganese-aluminium-based composite hydroxide. If the nickel content (e.g., amount) satisfies the above ranges, relatively high capacity can be achieved and structural stability can be increased even if the cobalt content (e.g., amount) is reduced.

The manganese content (e.g., amount) in the nickel-manganese-aluminium-based composite hydroxide may be about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30 mol%, based on 100 mol% of a total metal in the nickel-manganese-aluminium-based composite hydroxide. Additionally, the aluminium content (e.g., amount) in the nickel-manganese-aluminium-based composite hydroxide may be greater than or equal to about 0.1 mol%, greater than or equal to about 0.5 mol%, or greater than or equal to about 1 mol% for example about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-aluminium-based composite hydroxide. If the manganese and aluminium contents of the composite hydroxide satisfy the above ranges, relatively high capacity can be realized while structural stability of the positive electrode active material can be increased, and production price can be lowered to increase economic efficiency.

In the nickel-manganese-aluminium-based composite hydroxide, the cobalt content (e.g., amount) may be less than or equal to about 0.01 mol%, less than or equal to about 0.005 mol%, or less than or equal to about 0.001 mol% based on 100 mol% of a total metal in the nickel-manganese-aluminium-based composite hydroxide. This nickel-manganese-aluminium-based composite hydroxide may be economical as it avoids or reduces the increase in unit cost caused by cobalt, maximizes or increases capacity, and improves structural stability.

In some embodiments, the nickel-manganese-aluminium-based composite hydroxide may be represented by Chemical Formula 2.

[Chemical Formula 2] Niₓ₂Mn_{y2}Al_{z2}M²_{w2}(OH)₂

In Chemical Formula 2, 0.6≤x2≤0.8, 0.1≤y2≤0.39, 0.01≤z2≤0.03, 0≤w2≤ 0.29, and 0.9≤x2+y2+z2+w2≤1.1, and M² is one or more elements selected from among B, Ba, Ca, Ce, Cr, Fe, Mg, Mo, Nb, Si, Sn, Sr, Ti, V, W, and Zr. In some embodiments, 0.6≤x2≤0.79, 0.6≤x2≤0.78, 0.6≤x2≤0.75, 0.65≤x2≤0.8, or 0.7≤x2≤ 0.79; 0.1≤y2≤0.35, 0.1≤y2≤0.30, 0.1≤y2≤0.29, 0.15≤y2≤0.39, or 0.2≤y2≤0.3; 0.01≤ z2≤0.025, 0.01<z2≤0.02, or 0.01<z2≤0.019; and 0≤w2≤0.28, 0≤w2≤0.27, 0≤w2≤ 0.26, 0≤w2≤0.25, 0≤w2≤0.24, 0≤w2≤0.23, 0≤w2≤0.22, 0≤w2≤0.21, 0≤w2≤0.2, 0≤ w2≤0.15, 0≤w2≤0.1, or 0≤w2≤0.09.

The nickel-manganese-aluminium-based composite hydroxide is in the form of particles, and an average particle diameter (D₅₀) of the particles may be about 10 µm to about 18 µm, about 11 µm to about 16 µm, or about 12 µm to about 15 µm.

The nickel-manganese-based composite hydroxide and the lithium raw material may be mixed in a molar ratio of about 1:0.9 to about 1:1.8, for example, about 1:0.9 to about 1:1.5 or about 1:0.9 to about 1:1.2.

The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours.

Through the first heat treatment, lithium nickel-manganese-aluminium-based composite oxide may be obtained. The obtained composite oxide may include greater than or equal to about 60 mol%, for example, about 60 mol% to about 80 mol% of nickel based on 100 mol% of a total metal excluding lithium in the lithium nickel-manganese-aluminium-based composite oxide, but cobalt may not be included or included in a very small amount of less than or equal to about 0.01 mol% based on 100 mol% of a total metal excluding lithium in the lithium nickel-manganese-aluminium-based composite oxide. The composite oxide has a significantly different residual lithium content (e.g., amount) and different surface characteristics from an oxide with other compositions (e.g., other oxides), for example, a related art nickel-based oxide such as a lithium nickel-cobalt-manganese-based composite oxide, a lithium nickel-cobalt-aluminium-based composite oxide, and/or the like. Related art coating methods may not succeed in forming (or providing) a good or suitable coating layer thereon in the form of a substantially uniform film. In one or more embodiments, a method to improve relatively high-voltage characteristics by uniformly (substantially uniformly) forming (or providing) a coating layer with a very thin thickness on the surface of a lithium nickel-manganese-aluminium-based composite oxide with a very small amount of cobalt and a nickel content (e.g., amount) of greater than or equal to about 60 mol%.

In one or more embodiments, the lithium nickel-manganese-aluminium-based composite oxide obtained through the first heat treatment is mixed by adding it to an aqueous solvent mixed with the aluminium raw material and the yttrium raw material, followed by drying and a second heat treatment to obtain the coating layer according to one or more embodiments. This coating method can be referred to as a wet coating method.

The aqueous solvent may include distilled water, an alcohol-based solvent, or a (e.g., any suitable) combination thereof. The aluminium raw material may include, for example, aluminium nitrate, aluminium sulfate, aluminium carbonate, aluminium hydroxide, or a (e.g., any suitable) combination thereof. For example, the aluminium raw material may include aluminium sulfate, and in this case, it is suitable (e.g., advantageous) to form a coating layer with a substantially uniform thickness on the surface of the lithium nickel-manganese-based composite oxide particles. For example, the yttrium raw material may include yttrium nitrate, yttrium sulfate, yttrium carbonate, yttrium hydroxide, or a (e.g., any suitable) combination thereof.

The aluminium raw material is a raw material for forming (or providing) a coating layer, and the aluminium content (e.g., amount) from the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the finally obtained positive electrode active material. Likewise, the yttrium raw material is a raw material for forming (or providing) a coating layer, and the yttrium content (e.g., amount) from the yttrium raw material may be designed to be about 0.05 mol% to about 1 mol%, for example, about 0.1 mol% to about 1 mol%, about 0.1 mol% to about 0.9 mol%, about 0.1 mol% to about 0.8 mol%, or about 0.1 mol% to about 0.6 mol% based on 100 mol% of a total metal excluding lithium in the finally obtained positive electrode active material (e.g. about 0.1 mol% to about 0.5 mol%, about 0.2 mol% to about 0.5 mol%, or about 0.3 mol% to about 0.5 mol%). If the contents of the coating raw materials are designed to have the respective ranges, the coating layer may be formed to have a thin and substantially uniform thickness of tens or hundreds of nanometers, which may reduce an amount of gas generated in a rechargeable lithium battery under relatively high-voltage or relatively high-temperature operating conditions and improve relatively high-capacity and long cycle-life characteristics.

A solution obtained by mixing the aluminium raw material and yttrium raw material in an aqueous solvent may have a pH of about 1.5 to about 3.5, for example about 2.0 to about 3.4, about 2.5 to about 3.3, about 2.7 to about 3.3, or about 2.9 to about 3.2. Dropping (adding) and mixing the lithium nickel-manganese-aluminium-based composite oxide into an aqueous solvent mixed with the aluminium raw material and the yttrium raw material may proceed for about 5 minutes to about 80 minutes, about 5 minutes to about 60 minutes, or about 5 minutes to about 40 minutes (e.g. about 20 minutes to about 80 minutes, about 20 minutes to about 60 minutes, or about 20 minutes to about 40 minutes). After the stirring (mixing), the mixed solution may have pH of about 4.5 to about 8.5, for example, about 5.0 to about 8.0, about 5.5 to about 7.5, or about 6.0 to about 7.0. If these conditions are satisfied, it is suitable (e.g., advantageous) to form a coating layer with a substantially uniform thickness.

Drying after the mixing process can be understood as a process of removing the solvent and can be carried out, for example, at about 40 °C to about 240 °C, about 100 °C to about 220 °C, or about 150 °C to about 200 °C.

The second heat treatment may be understood as a process of forming (or providing) the coating layer, and may be performed, for example, in an oxygen atmosphere at a temperature range of about 700 °C to about 850 °C, about 750 °C to about 840 °C, or about 800 °C to about 830 °C for about 2 hours to about 20 hours, or about 3 to about 10 hours. Additionally, the second heat treatment temperature may be lower than the first heat treatment temperature, and the second heat treatment time may be the same as or shorter than the first heat treatment time. The desired or suitable coating layer can be obtained by performing a second heat treatment under these conditions.

### Positive Electrode

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the positive electrode active materials described above. Additionally, the positive electrode active material layer may optionally further include a binder, a conductive material, or a (e.g., any suitable) combination thereof.

According to one or more embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. When applying the positive electrode active material according to one or more embodiments, it is desirable or advantageous to implement such a loading level and positive electrode density, and a positive electrode that satisfies the loading level and positive electrode density in the above ranges is suitable for implementing a relatively high-capacity, relatively high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but the present disclosure is not limited thereto.

### Conductive Material

The conductive material (e.g., electron conductor) is included to provide electrode conductivity and any suitable electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a (e.g., any suitable) mixture thereof.

Each content (e.g., amount) of the binder and the conductive material may be about 0.5 wt% to about 5 wt%, based on 100 wt% of the positive electrode active material layer.

The positive electrode current collector may include Al, but the present disclosure is not limited thereto.

### Rechargeable Lithium Battery

According to some embodiments, a rechargeable lithium battery includes the aforementioned positive electrode, negative electrode, and electrolyte.

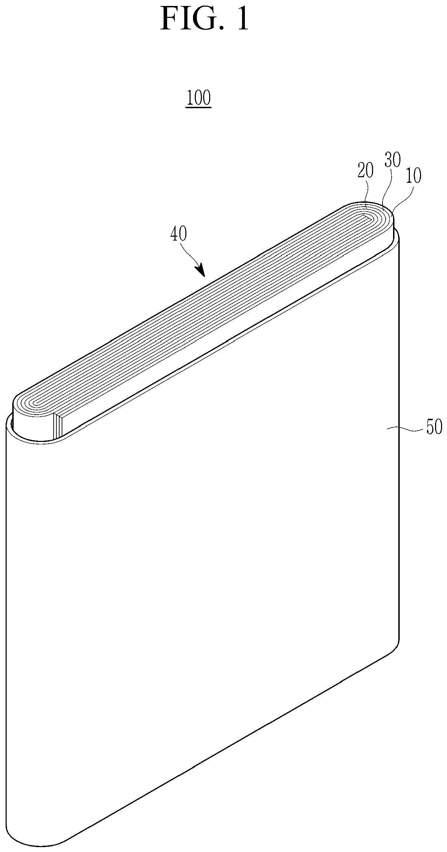

The rechargeable lithium battery may be classified into cylindrical, prismatic, pouch, coin, and/or the like, depending on the shape. FIG. 1 is a schematic view showing a rechargeable lithium battery according to one or more embodiments. Referring to FIG. 1, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte.

The rechargeable lithium battery according to one or more embodiments may be rechargeable at a relatively high voltage, or may be suitable for being driven at a relatively high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to one or more embodiments, the rechargeable lithium battery can significantly reduce an amount of gas generated even if (e.g., when) charged at relatively high voltage and can achieve relatively high capacity and long cycle-life characteristics.

### Negative Electrode

The negative electrode may include a current collector and a negative electrode active material layer on the current collector, and may further include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example crystalline carbon, amorphous carbon, or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a (e.g., any suitable) combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, or a (e.g., any suitable) combination thereof)), or a (e.g., any suitable) combination thereof. The Sn-based negative electrode active material may be Sn, SnOₓ (0 < x ≤ 2, e.g., SnO₂), a Sn alloy, or a (e.g., any suitable) combination thereof.

The silicon-carbon composite may be a composite of silicon and amorphous carbon. An average particle diameter (D₅₀) of the silicon-carbon composite particles (e.g., secondary particles) may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a (e.g., any suitable) combination thereof. The amorphous carbon may include soft carbon or hard carbon, a mesophase pitch carbonized product, and calcined coke

If (e.g., when) the silicon-carbon composite includes silicon and amorphous carbon, a silicon content (e.g., amount) may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist (may be present) as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As utilized herein, if (e.g., when) a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and utilized, a mixing ratio may be a weight ratio of about 1:99 to about 90:10.

### Binder

The binder serves to adhere (well adhere) the negative electrode active material particles to each other and also to adhere the negative electrode active material to the current collector. The binder may be a non-aqueous binder, an aqueous binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

If (e.g., when) an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber (e.g., in the form of a fiber), and may be, for example, polytetrafluoroethylene, polyvinylidene fluoride, a polyvinylidene fluoride-hexafluoropropylene copolymer, polyethylene oxide, or a (e.g., any suitable) combination thereof.

### Conductive Material

The conductive material (e.g., electron conductor) is included to provide electrode conductivity and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may include a non-aqueous organic solvent and a lithium salt.

The non-aqueous organic solvent serves as a medium for transmitting (e.g., transporting) ions taking part in the electrochemical reaction of a battery. The non-aqueous organic solvent may be a carbonate-based, ester-based, ether-based, ketone-based, or alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like; amides such as dimethylformamide; dioxolanes such as 1,3-dioxolane, 1,4-dioxolane, and/or the like; sulfolanes, and/or the like.

The non-aqueous organic solvent can be utilized alone or in a mixture of two or more types (kinds), and if (e.g., when) two or more types (kinds) are utilized in a mixture, a mixing ratio can be appropriately or suitably adjusted according to the desired or suitable battery performance, which is widely suitable to those working in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are each independently integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

A concentration of lithium salt may be within the range of about 0.1 M to about 2.0 M. If the concentration of lithium salt is within the above range, the electrolyte has appropriate or suitable ionic conductivity and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a (e.g., any suitable) combination thereof on a surface (e.g., one or both surfaces or sides (e.g., opposite surfaces)) of the porous substrate.

The porous substrate may be a polymer film formed of any one selected from among a polymer of polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiOs, Mg(OH)₂, boehmite, or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail. However, the following examples are only examples of the present disclosure, and the present disclosure is not limited to the following examples.

### Example 1

### 1. Preparation of Positive Electrode Active Material

Ni_{0.75}Mn_{0.24}Al_{0.01}(OH)₂ and LiOH were mixed in a molar ratio of 1:1 and then, primarily heat-treated at 850 °C under an oxygen atmosphere for 8 hours to prepare composite oxide in the form of secondary particles having a composition of LiNi_{0.75}Mn_{0.24}Al_{0.01}O₂ and an average particle diameter (D₅₀) of about 14 µm.

After mixing aluminium sulfate and yttrium nitrate with distilled water as a solvent, the composite oxide was added thereto and then, mixed for 20 minutes to 60 minutes. Herein, an aluminium content (e.g., amount) from the aluminium sulfate was designed to be 1.0 mol% based on 100 mol% of a total metal excluding lithium in a final positive electrode active material, and a yttrium content (e.g., amount) of the yttrium nitrate was designed to be 0.1 mol% based on 100 mol% of the total metal excluding lithium in the final positive electrode active material. After removing the solvent from the mixed solution, the residue was dried at 190 °C and then, secondarily heat-treated at 825 °C for 8 hours under an oxygen atmosphere to obtain the final positive electrode active material.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and then, dried and compressed to manufacture a positive electrode. At this time, a loading level of the positive electrode active material layer was 10 mg/cm², and the density of the final compressed positive electrode was about 3.4 g/cc.

97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.

A polytetrafluoroethylene separator was utilized, and an electrolyte prepared by dissolving 1 M LiPF₆ in a mixed solvent of ethylene carbonate and dimethyl carbonate in a volume ratio of 3:7 was utilized to manufacture a rechargeable lithium battery cell in a common method.

### Example 2

A positive electrode active material and a rechargeable lithium battery cell were manufactured in substantially the same manner as in Example 1 except that the yttrium content (e.g., amount) from the yttrium nitrate was designed to be 0.2 mol% based on 100 mol% of a total metal excluding lithium in the final positive electrode active material.

### Example 3

A positive electrode active material and a rechargeable lithium battery cell were manufactured in substantially the same manner as in Example 1 except that the yttrium content (e.g., amount) from the yttrium nitrate was designed to be 0.5 mol% based on 100 mol% of a total metal excluding lithium in the final positive electrode active material.

### Comparative Example 1

A positive electrode active material and a rechargeable lithium battery cell were manufactured in substantially the same manner as in Example 1 except that the composite oxide of LiNi_{0.75}Mn_{0.24}Al_{0.01}O₂ without the aluminium and yttrium coating was utilized as the positive electrode active material.

### Comparative Example 2

A positive electrode active material and a rechargeable lithium battery cell were manufactured in substantially the same manner as in Example 1 except that the positive electrode active material was prepared by adding the composite oxide and the aluminium sulfate other than the yttrium nitrate (e.g., without the yttrium nitrate) to the distilled water solvent to produce the aluminium coating alone.

### Comparative Example 3

A positive electrode active material and a rechargeable lithium battery cell were manufactured in substantially the same manner as in Example 2 except that the positive electrode active material was prepared by adding the composite oxide and the yttrium nitrate other than the aluminium sulfate (e.g., without the aluminium sulfate) to the distilled water solvent to produce the yttrium coating alone.

### Comparative Example 4

A positive electrode active material and a rechargeable lithium battery cell were manufactured in substantially the same manner as in Example 3 except that the positive electrode active material was prepared by adding the composite oxide and the yttrium nitrate other than the aluminium sulfate (e.g., without the aluminium sulfate) to the distilled water solvent to produce the yttrium coating alone.

For better understanding, the coating designs of the positive electrode active materials of Examples 1 to 3 and Comparative Examples 1 to 4 are shown in Table 1.

### Evaluation Example 1: Surface Analysis of Positive Electrode Active Material

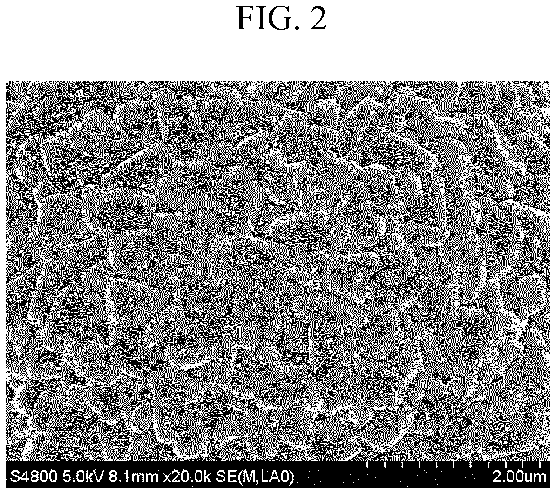

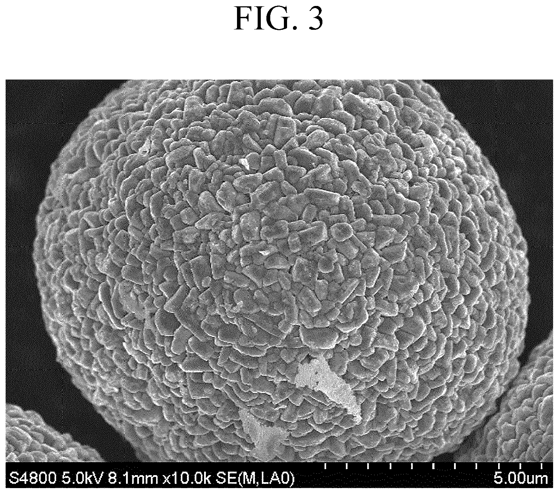

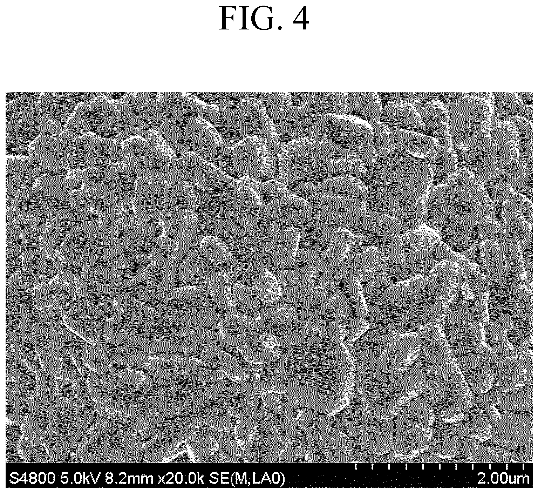

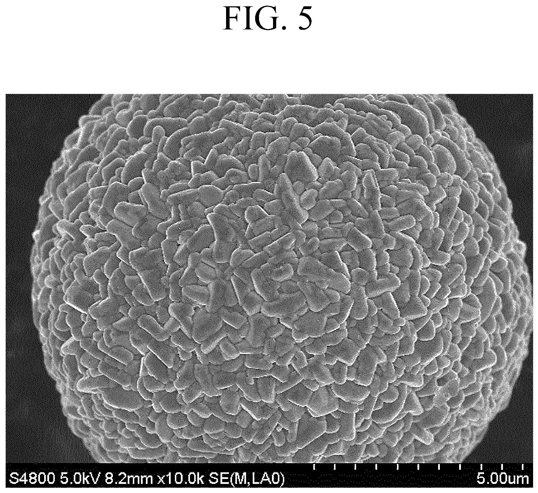

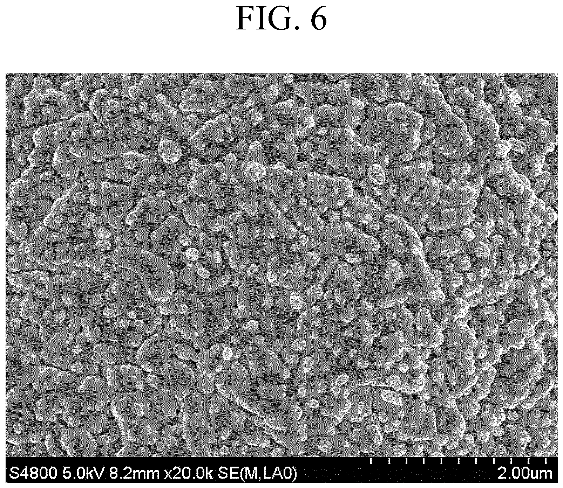

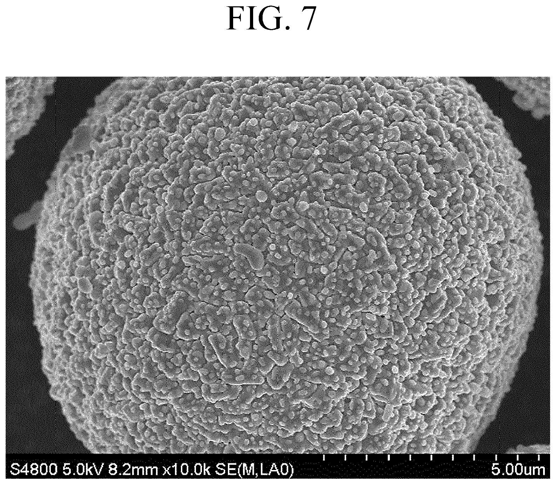

The positive electrode active materials of Example 2, and Comparative Examples 1 and 2 were imaged with a scanning electron microscope (SEM). FIGs. 2 and 3 are SEM images showing the particle surface of the positive electrode active material with no coating according to Comparative Example 1, FIGs. 4 and 5 are SEM images showing the particle surface of the positive electrode active material with the aluminium coating alone (without yttrium) according to Comparative Example 2, and FIGs. 6 and 7 are SEM images showing the particle surface of the positive electrode active material according to Example 2. Referring to FIGs. 2 to 7, the positive electrode active material of Example 2 turned out to have a different surface shape (e.g., morphology) from those of Comparative Examples 1 and 2.

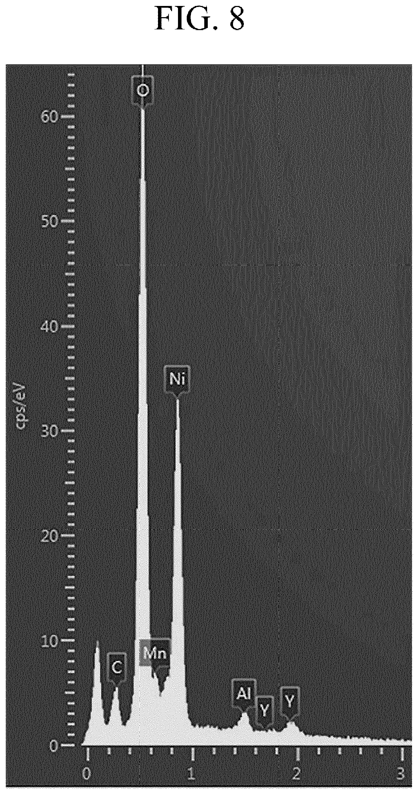

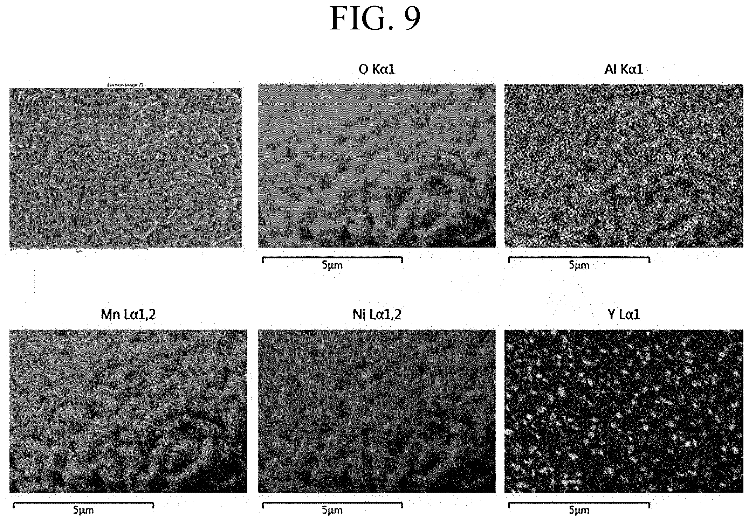

In addition, FIGs. 8 and 9 show a SEM-EDS analysis image of a cross-section of the positive electrode active material of Example 2. Referring to FIGs. 8 and 9, on the surface the positive electrode active material of Example 2, a coating layer containing Al and Y was uniformly (substantially uniformly) formed.

### Evaluation Example 2: Evaluation of Initial Charge/discharge Capacity and Efficiency

The rechargeable lithium battery cells according to Examples 1 to 3 and Comparative Examples 1 to 4 were each constant current-charged to an upper limit voltage of 4.45 V at 0.2 C and constant voltage-charged to 0.05 C and then, discharged to a cut-off voltage of 3.0 V at 0.2 C at 25 °C as initial charge and discharge. Table 1 shows the initial charge capacity, initial discharge capacity, and a ratio of the initial discharge capacity to the initial charge capacity as the initial efficiency.

### Evaluation Example 3: High Temperature Cycle-life Characteristics

After the initial charge and discharge of Evaluation Example 1, each of the cells was repeatedly charged and discharged at 1.0 C within a voltage range of 3.0 V to 4.45 V at 45 °C for 50 times to calculate a ratio of 50^{th} cycle discharge capacity to the initial discharge capacity, and the results are shown in Table 1.

### Evaluation Example 4: Evaluation of Amount of Gas Generated

The cells of Examples 1 to 3 and Comparative Examples 1 to 4 were initially charged at 4.45 V as in Evaluation Example 1 and stored at 90 °C for 4 hours to measure an amount of gas generated, and the results are shown in Table 1.

**Table 1**

| | Al coating (mol%) | Y coating (mol%) | Charge capacity (mAh/g) | Discharge capacity (mAh/g) | Initial charge and discharge efficiency (%) | 50th capacity retentio n rate (%) | Amount of gas generat ed (mL/g) |
|---|---|---|---|---|---|---|---|
| Example 1 | 1.0 | 0.1 | 229.3 | 194.6 | 84.9 | 93.4 | 12.3 |
| Example 2 | 1.0 | 0.2 | 228.4 | 194.4 | 85.1 | 95.1 | 9.99 |
| Example 3 | 1.0 | 0.5 | 225.9 | 192.5 | 85.2 | 95.5 | 8.78 |
| Comparative Example 1 | 0 | 0 | 229.5 | 194.4 | 84.7 | 91.5 | 14.2 |
| Comparative Example 2 | 1.0 | 0 | 229.6 | 195.0 | 84.9 | 93.3 | 13.0 |
| Comparative Example 3 | 0.0 | 0.2 | 229.7 | 194.1 | 84.5 | 92.5 | 13.9 |
| Comparative Example 4 | 0.0 | 0.5 | 228.8 | 194.0 | 84.8 | 93.4 | 13.5 |

Referring to Table 1, the rechargeable lithium battery cells of Examples 1 to 3 each achieved higher or equal charge/discharge capacity and higher efficiency characteristics than those of the comparative examples and also exhibited improved high temperature lifespan characteristics and reduced gas generation under high voltage and high temperature conditions. Comparative Example 1 with no coating exhibited inferior high temperature lifespan characteristics and high gas generation, and Comparative Example 2 with the aluminium coating alone and Comparative Example 4 with the yttrium coating alone each exhibited higher gas generation than the examples under the high voltage and high temperature conditions.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Unless otherwise defined, in the present disclosure, the term "particle diameter" refers to an average diameter if (e.g., when) particles are spherical and refers to an average major axis length if (e.g., when) particles are non-spherical.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments, but, on the contrary, is intended to cover various modifications and equivalent arrangements included within the scope of the appended claims, and equivalents thereof.

### <Reference Numerals >

| | | | |
|---|---|---|---|
| 100: | rechargeable lithium battery | 10: | positive electrode |
| 20: | negative electrode | 30: | separator |
| 40: | electrode assembly | 50: | case |

Embodiments are set out in the following clauses:
Clause 1. A positive electrode active material, comprising
   core particles including the lithium nickel-manganese-aluminium-based composite oxide,
   a coating layer disposed on a surface of the core particles and containing yttrium,
   wherein a nickel content is greater than or equal to about 60 mol% based on 100 mol% of a total metal excluding lithium, and
   an aluminium content of the coating layer is about 0.1 mol% to about 2 mol%, and an yttrium content of the coating layer is about 0.05 mol% to about 1 mol% based on 100 mol% of a total metal excluding lithium.
Clause 2. The positive electrode active material of clause 1, wherein
   the aluminium content of the coating layer is about 0.5 mol% to about 1.5 mol% and
   the yttrium content of the coating layer is about 0.1 mol% to about 0.8 mol%.
Clause 3. The positive electrode active material of clause 1 or clause 2, wherein the coating layer is in a form of a shell that continuously surrounds the surface of the core particle.
Clause 4. The positive electrode active material of any one of clauses 1 to 3, wherein a thickness of the coating layer is about 30 nm to about 500 nm.
Clause 5. The positive electrode active material of any one of clauses 1 to 4, wherein a deviation in coating layer thickness in one positive electrode active material is less than or equal to about 20 %.
Clause 6. The positive electrode active material of any one of clauses 1 to 5, wherein aluminium exists in a form of a continuous film and yttrium exists in a form of islands in the coating layer.
Clause 7. The positive electrode active material of any one of clauses 1 to 6, wherein aluminium and yttrium are mixed in the coating layer.
Clause 8. The positive electrode active material of any one of clauses 1 to 7, wherein the positive electrode active material includes
   a first coating layer located on a surface of the core particles and containing aluminium and
   a second coating layer located on the first coating layer and containing yttrium.
Clause 9. The positive electrode active material of clause 8, wherein
   a thickness of the first coating layer is about 10 nm to about 200 nm and
   a thickness of the second coating layer is about 20 nm to about 300 nm.
Clause 10. The positive electrode active material of any one of clauses 1 to 9, wherein the coating layer further contains nickel, manganese, or a combination thereof.
Clause 11. The positive electrode active material of any one of clauses 1 to 10, wherein the nickel content is about 60 mol% to about 80 mol% based on 100 mol% of a total metal excluding lithium.
Clause 12. The positive electrode active material of any one of clauses 1 to 11, wherein the aluminium content in the core particles is about 1 mol% to about 3 mol% based on 100 mol% of a total metal excluding lithium.
Clause 13. The positive electrode active material of any one of clauses 1 to 12, wherein
   the lithium nickel-manganese-aluminium-based composite oxide of the core particles is represented by Chemical Formula 1:

      [Chemical Formula 1] Liₐ₁Niₓ₁Mn_{y1}Al_{z1}M¹_{w1}O_{2-b1}X_{b1}
   wherein in Chemical Formula 1,
      0.9≤a1≤1.8, 0.6≤x1≤0.8, 0.1≤y1≤0.39, 0.01<z1≤0.03, 0≤w1 ≤0.29, 0.9≤ x1+y1+z1+w1≤1.1, and 0≤b1≤0.1,
      M¹ is one or more elements selected from Al, B, Ba, Ca, Ce, Cr, Fe, Mg, Mo, Nb, Si, Sn, Sr, Ti, V, W, and Zr, and
      X is one or more elements selected from F, P, and S.
Clause 14. The positive electrode active material of any one of clauses 1 to 13, wherein the cobalt content is about 0 mol% to about 0.01 mol% based on 100 mol% of a total metal excluding lithium.
Clause 15. The positive electrode active material of any one of clauses 1 to 14, wherein the lithium nickel-manganese-aluminium-based composite oxide of the core is a cobalt-free compound.
Clause 16. The positive electrode active material of any one of clauses 1 to 15, wherein the core particles are in a form of secondary particles made by agglomerating a plurality of primary particles.
Clause 17. The positive electrode active material of clause 16, wherein the positive electrode active material further includes a grain boundary coating portion disposed on the surfaces of primary particles inside the secondary particles and containing aluminium.
Clause 18. The positive electrode active material of clause 17, wherein the grain boundary coating portion further contains nickel, manganese, yttrium, or a combination thereof.
Clause 19. The positive electrode active material of clause 17 or clause 18, wherein the aluminium content of the grain boundary coating portion is less than the aluminium content of the coating layer.
Clause 20. The positive electrode active material of any one of clauses 1 to 19, wherein an average particle diameter (D₅₀) of the positive electrode active material is about 10 µm to about 18 µm.
Clause 21. The positive electrode active material of any one of clauses 1 to 20, wherein the positive electrode active material does not contain sodium.
Clause 22. A method of preparing a positive electrode active material, comprising
   mixing a nickel-manganese-aluminium-based composite hydroxide and a lithium raw material and performing a first heat treatment to obtain a lithium nickel-manganese-aluminium-based composite oxide, and
   adding the lithium nickel-manganese-based composite oxide to a solution in which an aluminium raw material and an yttrium raw material are mixed in an aqueous solvent, followed by mixing, drying, and performing a second heat treatment,
   wherein in the nickel-manganese-aluminium-based composite hydroxide, a nickel content is greater than or equal to about 60 mol% based on 100 mol% of a total metal,
   an aluminium content of the aluminium raw material is about 0.1 mol% to 2 mol% based on 100 mol% of a total metal excluding lithium in the positive electrode active material, and
   a yttrium content of the yttrium raw material is about 0.05 mol% to 1 mol% based on 100 mol% of a total metal excluding lithium in the positive electrode active material.
Clause 23. The method of clause 22, wherein
   the aluminium content of the aluminium raw material is about 0.5 mol% to about 1.5 mol% based on 100 mol% of a total metal excluding lithium in the positive electrode active material, and
   the yttrium content of the yttrium raw material is about 0.1 mol% to about 0.8 mol% based on 100 mol% of a total metal excluding lithium in the positive electrode active material.
Clause 24. The method of clause 22 or clause 23, wherein
   the aluminium raw material includes aluminium nitrate, aluminium sulfate, aluminium carbonate, aluminium hydroxide, or a combination thereof, and
   the yttrium raw material includes yttrium nitrate, yttrium sulfate, yttrium carbonate, yttrium hydroxide, or a combination thereof.
Clause 25. The method of any one of clauses 22 to 24, wherein the solution mixed with the aluminium raw material and the yttrium raw material in the aqueous solvent has a pH of about 1.5 to about 3.5.
Clause 26. The method of any one of clauses 22 to 25, wherein
   the first heat treatment is performed at about 750 °C to about 950 °C, and
   the second heat treatment is performed at 700 °C to about 850 °C.
Clause 27. The method of any one of clauses 22 to 26, wherein the nickel-manganese-aluminium-based composite hydroxide has a nickel content of about 60 mol% to about 80 mol% and an aluminium content of about 1 mol% to about 3 mol% based on 100 mol% of a total metal.
Clause 28. A positive electrode, comprising
   a positive electrode current collector, and
   a positive electrode active material layer on the positive electrode current collector,
   wherein the positive electrode active material layer includes the positive electrode active material of any one of clauses 1 to 21.
Clause 29. The positive electrode of clause 28, wherein a loading level of the positive electrode active material layer is about 10 mg/cm² to about 40 mg/cm².
Clause 30. The positive electrode of clause 28 or clause 29, wherein a density of the positive electrode active material layer is about 3.3 g/cc to about 3.7 g/cc.
Clause 31. A rechargeable lithium battery, comprising
   the positive electrode of any one of clauses 28 to 30,
   a negative electrode, and
   an electrolyte.
Clause 32. The rechargeable lithium battery of clause 31, wherein a charging voltage is greater than or equal to about 4.45 V.

## Claims

1. A positive electrode active material comprising:
a core particle comprising a lithium nickel-manganese-aluminium-based composite oxide, and
a coating layer on a surface of the core particle and containing aluminium and yttrium,
wherein
nickel in the core particle is greater than or equal to about 60 mol% in amount based on 100 mol% of a total metal excluding lithium in the positive electrode active material,
aluminium in the coating layer is about 0.1 mol% to about 2 mol% in amount based on 100 mol% of the total metal excluding lithium in the positive electrode active material, and
yttrium in the coating layer is about 0.05 mol% to about 1 mol% in amount based on 100 mol% of the total metal excluding lithium in the positive electrode active material.

2. The positive electrode active material as claimed in claim 1, wherein
aluminium in the coating layer is about 0.5 mol% to about 1.5 mol% in amount based on 100 mol% of the total metal excluding lithium in the positive electrode active material, and/or
yttrium in the coating layer is about 0.1 mol% to about 0.8 mol% in amount based on 100 mol% of the total metal excluding lithium in the positive electrode active material.

3. The positive electrode active material as claimed in claim 1 or claim 2, wherein the coating layer is in a form of a shell that continuously surrounds the surface of the core particle.

4. The positive electrode active material as claimed in any one of claims 1 to 3, wherein a thickness of the coating layer is about 30 nm to about 500 nm.

5. The positive electrode active material as claimed in any one of claims 1 to 4, wherein a deviation in a thickness of the coating layer is less than or equal to about 20 %.

6. The positive electrode active material as claimed in any one of claims 1 to 5, wherein:
(i) aluminium in the coating layer is in a form of a continuous film and yttrium is in a form of islands in the coating layer; and/or
(ii) aluminium and yttrium are mixed in the coating layer.

7. The positive electrode active material as claimed in any one of claims 1 to 6, wherein the positive electrode active material comprises:
a first coating layer on the surface of the core particle and comprising aluminium, and
a second coating layer on the first coating layer and comprising yttrium;
optionally wherein:
a thickness of the first coating layer is about 10 nanometer (nm) to about 200 nm, and/or
a thickness of the second coating layer is about 20 nm to about 300 nm.

8. The positive electrode active material as claimed in any one of claims 1 to 7, wherein:
(i) the coating layer further contains nickel, manganese, or a combination thereof; and/or
(ii) nickel in the core particle is about 60 mol% to about 80 mol% in amount based on 100 mol% of the total metal excluding lithium in the positive electrode active material; and/or
(iii) aluminium in the core particle is about 1 mol% to about 3 mol% in amount based on 100 mol% of the total metal excluding lithium in the positive electrode active material; and/or
(iv) the lithium nickel-manganese-aluminium-based composite oxide of the core particle is represented by Chemical Formula 1:
[Chemical Formula 1] Liₐ₁Niₓ₁Mn_{y1}Al_{z1}M¹_{w1}O_{2-b1}X_{b1}
wherein in Chemical Formula 1,
0.9≤a1≤1.8, 0.6≤x1≤0.8, 0.1≤y1≤0.39, 0.01≤z1≤0.03, 0≤w1 ≤0.29, 0.9≤ x1+y1+z1+w1≤1.1, and 0≤b1≤0.1,
M¹ is one or more elements selected from among B, Ba, Ca, Ce, Cr, Fe, Mg, Mo, Nb, Si, Sn, Sr, Ti, V, W, and Zr, and
X is one or more elements selected from among F, P, and S; and/or
(v) cobalt is about 0 mol% to about 0.01 mol% based on 100 mol% of the total metal excluding lithium in the positive electrode active material; and/or
(vi) the lithium nickel-manganese-aluminium-based composite oxide of the core particle is a cobalt-free compound.

9. The positive electrode active material as claimed in any one of claims 1 to 8, wherein the core particle are in a form of a secondary particle made by agglomerating a plurality of primary particles.

10. The positive electrode active material as claimed in claim 9, further comprising a grain boundary coating portion on surfaces of the primary particles inside the secondary particle and comprising aluminium;
optionally wherein:
(i) the grain boundary coating portion further comprises nickel, manganese, yttrium, or a combination thereof; and/or
(ii) aluminium in the grain boundary coating portion is less in amount than aluminium in the coating layer.

11. The positive electrode active material as claimed in any one of claims 1 to 10, wherein:
(i) an average particle diameter (D₅₀) of the positive electrode active material in the form of particles is about 10 µm to about 18 µm; and/or
(ii) the positive electrode active material does not contain sodium.

12. A method of preparing a positive electrode active material, the method comprising:
mixing a nickel-manganese-aluminium-based composite hydroxide and a lithium raw material and performing a first heat treatment to obtain a lithium nickel-manganese-aluminium-based composite oxide, and
adding the lithium nickel-manganese-aluminium-based composite oxide to a solution comprising an aluminium raw material and a yttrium raw material mixed in an aqueous solvent, followed by mixing, drying, and performing a second heat treatment,
wherein
in the nickel-manganese-aluminium-based composite hydroxide, nickel is greater than or equal to about 60 mol% in amount based on 100 mol% of a total metal in the nickel-manganese-aluminium-based composite hydroxide,
aluminium from the aluminium raw material is about 0.1 mol% to 2 mol% in amount based on 100 mol% of a total metal excluding lithium in the positive electrode active material, and
yttrium from the yttrium raw material is about 0.05 mol% to 1 mol% in amount based on 100 mol% of a total metal excluding lithium in the positive electrode active material.

13. The method as claimed in claim 12, wherein:
(i) aluminium from the aluminium raw material is about 0.5 mol% to about 1.5 mol% in amount based on 100 mol% of the total metal excluding lithium in the positive electrode active material, and/or
yttrium from the yttrium raw material is about 0.1 mol% to about 0.8 mol% in amount based on 100 mol% of the total metal excluding lithium in the positive electrode active material; and/or
(ii) the aluminium raw material comprises aluminium nitrate, aluminium sulfate, aluminium carbonate, aluminium hydroxide, or a combination thereof, and/or
the yttrium raw material comprises yttrium nitrate, yttrium sulfate, yttrium carbonate, yttrium hydroxide, or a combination thereof; and/or
(iii) the solution comprising the aluminium raw material and the yttrium raw material mixed in the aqueous solvent has a pH of about 1.5 to about 3.5; and/or
(iv) the first heat treatment is performed at about 750 °C to about 950 °C, and/or the second heat treatment is performed at 700 °C to about 850 °C; and/or
(v) the nickel-manganese-aluminium-based composite hydroxide has
nickel of about 60 mol% to about 80 mol% based on 100 mol% of the total metal in the nickel-manganese-aluminium-based composite hydroxide, and/or
aluminium of about 1 mol% to about 3 mol% based on 100 mol% of the total metal in the nickel-manganese-aluminium-based composite hydroxide.

14. A positive electrode comprising:
a positive electrode current collector, and
a positive electrode active material layer on the positive electrode current collector,
wherein the positive electrode active material layer comprises the positive electrode active material as claimed in any one of claims 1 to 11;
optionally wherein:
(i) a loading level of the positive electrode active material layer is about 10 mg/cm² to about 40 mg/cm²; and/or
(ii) a density of the positive electrode active material layer is about 3.3 g/cc to about 3.7 g/cc.

15. A rechargeable lithium battery, comprising:
the positive electrode as claimed in claim 14,
a negative electrode, and
an electrolyte;
optionally wherein a charging voltage is greater than or equal to about 4.45 V.
